# EUROPEAN PATENT APPLICATION

(11) **EP 2 540 590 A1**
(43) Date of publication of application: **02.01.2013**
(21) Application number: 11746990.8
(22) Date of filing: 10.02.2011
(51) Int. Cl.: B60W 10/10, B60K 6/485, B60K 6/52, B60K 6/54, B60K 17/35, B60L 7/10, B60L 11/14, B60W 10/02, B60W 10/18, B60W 20/00

(54) **POWER TRANSMISSION DEVICE FOR FOUR-WHEEL-DRIVE HYBRID VEHICLE**

(30) Priority: 23.02.2010 JP 2010036924
(71) Applicant: AISIN AI Co., Ltd., Nishio-shi Aichi-ken 445-0006 (JP)
(72) Inventor: SASAKI, Kan, Nishio-shi Aichi 445-0006 (JP); KOIDE, Takeharu, Nishio-shi Aichi 445-0006 (JP); MIYANO, Hirokuni, Nishio-shi Aichi 445-0006 (JP); KITAOKA, Shinji, Nishio-shi Aichi 445-0006 (JP)
(74) Representative: Winter, Brandl, Fürniss, Hübner, Röss, Kaiser, Polte - Partnerschaft
(86) International application number: PCT/JP2011/000756
(87) International publication number: WO 2011/105017

(57) **Abstract**

A power transmission apparatus (11) for four-wheel-drive hybrid vehicle according to the present invention is characterized in that it comprises a front-wheel/rear-wheel driving-force distributor means (21) for distributing rotary powers, which are output from an internal combustion engine (31) as well as a rotary electric appliance (32), between front wheels (91) and rear wheels (93), and then transmitting the rotary powers to them;
wherein the front-wheel/rear-wheel driving-force distributor means (21) sets up the following when braking a vehicle:
a rear-wheel disconnection mode for disconnecting between the front-wheel/rear-wheel driving-force distributor means (21) and the rear wheels (93);
a front-wheel connection mode for connecting between the front-wheel/rear-wheel driving-force distributor means (21) and the front wheels (91); and
a regeneration mode for regenerating the rotary powers from the front wheels (91) by the rotary electric appliance (32).

## Description

### TECHNICAL FIELD

The present invention relates to a power transmission apparatus for four-wheel-drive hybrid vehicle.

### BACKGROUND ART

As one of hybrid vehicles in which an internal combustion engine and a motor make the power source, there is one which has such constitutions as shown by Patent Literature No. 1. Moreover, four-wheel-driving vehicles, in which an internal combustion engine and a motor make the power source, have been developed recently.

Incidentally, in four-wheel-drive vehicles, there is one having a transfer (or front-wheel/rear-wheel driving-force distributor apparatus) that distributes driving forces between the front wheels and the rear wheels. Upon driving a vehicle by the four wheels, the driving-force distribution ratios between the front wheels and the rear wheels can be about 30-50% for the front wheels, and about 50-70% for the rear wheels, when accelerating the vehicle, or when driving or cruising it steadily, or when circling or cornering it (hereinafter referred to as "when accelerating and so forth a vehicle" collectively) ; whereas it is said to be optimum that, at the time of braking the vehicle, the braking-force distribution ratios can be about 70-80% for the front wheels, and about 20-30% for the rear wheels. For example, in a transfer being used for PAJERO of MITSUBISHI MOTORS CORPORATION, they are about 30% for the front wheels, and about 70% for the rear wheels.

In a hybrid vehicle using such a transfer in which the driving-force distribution ratios are determined as described above on the assumption that the vehicle is placed in the situations when it is accelerated and so forth, the following problems could be assumed when braking the vehicle is carried out mainly by regeneration braking in order to make the regenerative energy to the motor for regeneration greater as much as possible: the braking force would decline when the rear wheels are taken as the standard; whereas the rear wheels would cause slippage when the front wheels are taken as the standard; and thereby the vehicular stability would decline and so on; because the distribution ratios are not for needed braking force. Thus, at the time of braking the vehicle, it is braked mainly by a mechanical brake, and so it would not be possible to recover much of loads (or kinetic energies), which are applied to the wheels, as the regenerative energy.
Patent Literature No. 1: International Publication Pamphlet No. WO/2009/051143

### DISCLOSURE OF THE INVENTION

### Assignment to be Solved by the Invention

The present invention is one which has been done in view of the aforementioned assignments. It is an assignment to be solved to provide a power transmission apparatus for four-wheel-drive hybrid vehicle that can augment an amount of the regenerative energy.

### Means for Solving the Assignment

Constitutional characteristics of the invention being directed to claim 1 for solving the aforementioned assignment lie in that:
it comprises a front-wheel/rear-wheel driving-force distributor means for distributing rotary powers, which are output from an internal combustion engine as well as a rotary electric appliance, between front wheels and rear wheels, and then transmitting the rotary powers to them;
wherein said front-wheel/rear-wheel driving-force distributor means sets up the following when braking a vehicle:
   a rear-wheel disconnection mode for disconnecting between said front-wheel/rear-wheel driving-force distributor means and said rear wheels;
   a front-wheel connection mode for connecting between said front-wheel/rear-wheel driving-force distributor means and said front wheels; and
   a regeneration mode for regenerating said rotary powers from said front wheels by said rotary electric appliance.

Moreover, constitutional characteristics of the invention being directed to claim 2 lie in that, in claim 1, said front-wheel/rear-wheel driving-force distributor means comprises:
a differential device for absorbing rotational differences between said front wheels and said rear wheels;
a locker means for putting said differential device into a locked mode; and
a rear-wheel interrupter means for interrupting between said differential device and said rear wheels;
wherein said front-wheel connection mode is to put said locker means into said locked mode; and
said rear-wheel disconnection mode is to put said rear-wheel interrupter means into disconnection.

Moreover, constitutional characteristics of the invention being directed to claim 3 lie in that, in claim 1, said front-wheel/rear-wheel driving-force distributor means comprises:
a rear-wheel interrupter means for interruptibly coupling between said rear wheels and said internal combustion engine as well as said rotary electric appliance; and
a front-wheel coupler means for always connecting or interruptibly coupling between said front wheels and said internal combustion engine as well as said rotary electric appliance;
wherein said front-wheel connection mode is to put said front-wheel coupler means into connection; and
said rear-wheel disconnection mode is to put said rear-wheel interrupter means into disconnection.

### Effect of the Invention

In the invention being directed to claim 1, the front-wheel/rear-wheel driving-force distributor means, which distributes rotary powers being output from an internal combustion engine as well as a rotary electric appliance between front wheels and rear wheels, and which then transmits the rotary powers to them, sets up the following when braking a vehicle: a rear-wheel disconnection mode for disconnecting between the front-wheel/rear-wheel driving-force distributor means and the rear wheels; and a front-wheel connection mode for connecting between the front-wheel/rear-wheel driving-force distributor means and the front wheels. That is, at the time of braking a vehicle, the connection between the rear wheels and the internal combustion engine as well as the rotary electric appliance is disconnected, and only the front-wheel side turns into a connection mode with the internal combustion engine as well as the rotary electric appliance. And, the front-wheel/rear-wheel driving-force distributor means turns into a regeneration mode for regenerating the rotary powers from the front wheels at the rotary electric appliance . That is, it becomes possible to regenerate an amount of regenerative energy, which is transmitted from the front wheels to the rotary electric appliance by way of the front-wheel/rear-wheel driving-force distributor means, regardless of the rear wheels, and hence it is possible to regenerate the loads (or kinetic energies) being applied to the front wheels depending on needs. Note that it is not possible to regenerate the loads being applied to the rear wheels as regenerative energy at the rotary electric appliance by setting up such a constitution. However, since the loads to the front wheels are larger at the time of braking a vehicle, it is possible to expect that a regenerative energy, which comes from the front wheels to the rotary electric appliance for regeneration after disconnecting the rear wheels, can become greater than another regenerative energy, which results from fixed distribution ratios and comes from the front wheels and rear wheels for regeneration. Therefore, in accordance with the constitution according to the invention of the present application, an amount of regenerative energy augments.

In the invention being directed to claim 2, the front-wheel/rear-wheel driving-force distributor means comprises the differential device, the locker means and the rear-wheel interrupter means, front-wheel/rear-wheel driving-force distributor means in which the front-wheel connection mode is to put the locker means into the locked mode; and the rear-wheel disconnection mode is to put the rear-wheel interrupter means into disconnection. It is possible for the differential device to employ conventional devices in which publicly-known technologies that can absorb rotational differences between the front wheels and the rear wheels. When being turned into the rear-wheel disconnection mode, it becomes impossible to transmit rotary powers between the differential device and the front wheels. In order to transmit the rotary powers between the differential device and the front wheels, the differential device is put into the locked mode by the locker means. Therefore, the front wheels and the internal combustion engine as well as the rotary electric appliance are coupled with each other directly. Thus, it becomes possible to regenerate an amount of regenerative energy, which is transmitted from the front wheels to the rotary electric appliance by way of the front-wheel/rear-wheel driving-force distributor means, regardless of the rear wheels, and hence it is possible to regenerate the loads being applied the front wheels depending on needs. Note that it is not possible to regenerate the loads being applied to the rear wheels as regenerative energy at the rotary electric appliance by setting up such a constitution. However, since the loads to the front wheels are larger at the time of braking a vehicle, it is possible to expect that a regenerative energy, which comes from the front wheels to the rotary electric appliance for regeneration after disconnecting the rear wheels, can become greater than another regenerative energy, which results from fixed distribution ratios and comes from the front wheels and rear wheels for regeneration. Therefore, in accordance with the constitution according to the invention of the present application, an amount of regenerative energy augments.

In the invention being directed to claim 3, the front-wheel/rear-wheel driving-force distributor means comprises the rear-wheel interrupter means and the front-wheel coupler means, front-wheel/rear-wheel driving-force distributor means in which the front-wheel connection mode is dealt with by putting the front-wheel coupler means into connection and the rear-wheel disconnection mode is dealt with by putting the rear-wheel interrupter means into disconnection. Therefore, at the time of braking a vehicle, the front wheels are coupled directly with the internal combustion engine as well as the rotary electric appliance, and the rear wheels are disconnected from the internal combustion engine as well as the rotary electric appliance. That is, it becomes possible to regenerate an amount of regenerative energy, which is transmitted from the front wheels to the rotary electric appliance by way of the front-wheel/rear-wheel driving-force distributor means, regardless of the rear wheels, and hence it is possible to regenerate the loads being applied the front wheels depending on needs. Note that it is not possible to regenerate the loads being applied to the rear wheels as regenerative energy at the rotary electric appliance by setting up such a constitution. However, since the loads to the front wheels are larger at the time of braking a vehicle, it is possible to expect that a regenerative energy, which comes from the front wheels to the rotary electric appliance for regeneration after disconnecting the rear wheels, can become greater than another regenerative energy, which results from fixed distribution ratios and comes from the front wheels and rear wheels for regeneration. Therefore, in accordance with the constitution according to the invention of the present application, an amount of regenerative energy augments.

### BRIEF DESCRIPTION OF THE DRAWINGS

Fig. 1 is an explanatory diagram that schematically expresses a constitution of a vehicle that has a power transmission apparatus 11 for four-wheel-drive hybrid vehicle according to present Embodiment No. 1 on-board;
Fig. 2 is an explanatory diagram that schematically expresses a constitution of the power transmission apparatus 11 for four-wheel-drive hybrid vehicle according to present Embodiment No. 1;
Fig. 3 is an explanatory diagram that schematically expresses a constitution of a power transmission apparatus 14 for four-wheel-drive hybrid vehicle according to present Modified Embodiment No. 1;
Fig. 4 is an explanatory diagram that schematically expresses a constitution of a power transmission apparatus 15 for four-wheel-drive hybrid vehicle according to present Modified Embodiment No. 2;
Fig. 5 is an explanatory diagram that schematically expresses a constitution of a power transmission apparatus 16 for four-wheel-drive hybrid vehicle according to present Modified Embodiment No. 3;
Fig. 6 is an explanatory diagram that schematically expresses a constitution of a power transmission apparatus 17 for four-wheel-drive hybrid vehicle according to present Modified Embodiment No. 4;
Fig. 7 is an explanatory diagram that schematically expresses a constitution of a power transmission apparatus 18 for four-wheel-drive hybrid vehicle according to present Modified Embodiment No. 5;
Fig. 8 is an explanatory diagram that schematically expresses a constitution of a power transmission apparatus 12 for four-wheel-drive hybrid vehicle according to present Embodiment No. 2;
Fig. 9 is an explanatory diagram that schematically expresses a constitution of a power transmission apparatus 13 for four-wheel-drive hybrid vehicle according to present Embodiment No. 3; and
Fig. 10 is an explanatory diagram that schematically expresses a constitution of a change-speed gearbox and transfer that have been employed in a conventional four-wheel-drive vehicle.

### Explanation on Reference Numerals

11 through 18: Power Transmission Apparatuses;
21 through 27: Transfers;
31: Internal Combustion Engine; 32: Motor Generator; 33: Change-speed Gearbox; 34: Input Unit;
41: Differential Device; 42: Locker Means;
43, 44: Front-wheel Coupler Means;
5: Rear-wheel Disconnector Means;
71 through 78: Gears;
81, 82, 84: Shafts; 83, 85: Additional Shafts;
91: Front Wheels; 92: Front-wheel Driving Shaft; 93: Rear Wheels; 94: First Rear-wheel Driving Shaft; 95: Second Rear-wheel Driving Shaft; 96: Rear-wheel Transmission Unit; 97: First Front-wheel Driving Shaft; and 98: Second Front-wheel Driving Shaft

### BEST MODE FOR CARRYING OUT THE INVENTION

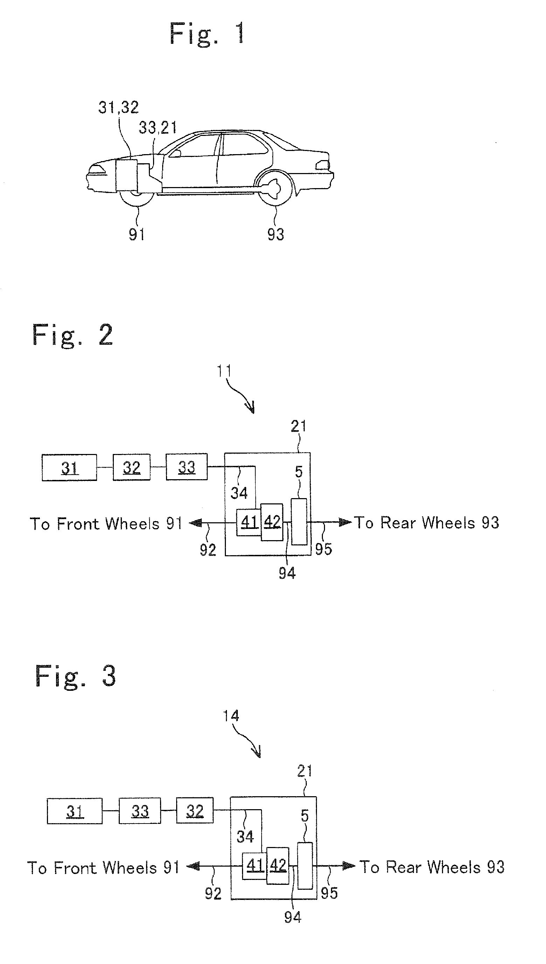

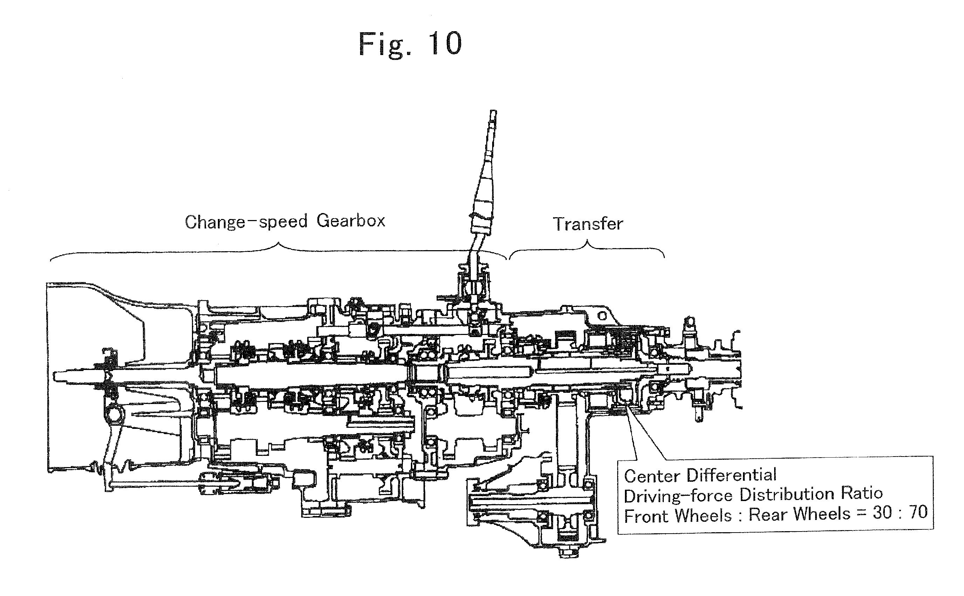

Representative Embodiments according to the present invention will be explained with reference to Fig. 1 through Fig. 10. A power transmission apparatus for four-wheel-drive hybrid vehicle (hereinafter referred to as a "power transmission apparatus") being directed to the present embodiment modes is mounted on a vehicle that comprises an internal combustion engine and a motor generator (i.e., a rotary electric appliance) as the driving-power sources; and is an apparatus that transmits rotary powers, which the internal combustion engine and motor generator output, to the wheels.

### (Embodiment No. 1)

As illustrated in Fig. 1 and Fig. 2, a power transmission apparatus 11 according to present Embodiment No. 1 comprises a transfer (or a front-wheel/rear-wheel driving-force distributor device) 21. And, as the other means, it further comprises a change-speed gearbox 33, a front-wheel transmission unit 92, a first rear-wheel transmission unit 94, a second rear-wheel transmission unit 95, a front-wheel differential device (not shown in the figures), a rear-wheel differential device (not shown in the figures), and the like.

The transfer 21 is connected with the internal combustion engine 31 and motor generator 32, the power sources, by way of the change-speed gearbox 33. The change-speed gear box 33, and the transfer 21 are connected one another by means of the input unit 34. Note that the change-speed gearbox 33 is connected with the motor generator 32 and then the motor generator 32 is connected with the internal combustion engine. The transfer 21 comprises a differential device 42, a locker means 42, and a rear-wheel interrupter means 5; distributes rotary powers, which are output from the internal combustion engine 31 as well as the motor generator 32 between the front wheels 91 and the rear wheels 93; and then transmits the rotary powers to them. And, the transfer 21 makes the following modes at the time of braking a vehicle: a rear-wheel disconnection mode for disconnecting between the transfer 21 and the rear wheels 93; a front-wheel connection mode for connecting between the transfer 21 and the front wheels 91; and a regeneration mode for regenerating the rotary powers from the front wheels by the motor generator 32. As for distribution ratios that the transfer 21 distributes the rotary powers between the front wheels 91 and the rear wheels 93, distributions ratios that have been set up in general shall be set up herein. For example, they can be set up as follows: 40% for the front wheels 91; whereas 60% for the rear wheels 93.

The differential device 41 connects the front-wheel transmission unit 92 for transmitting the rotary powers between the change-speed gearbox 33 and the front wheels 93 with the first rear-wheel transmission unit 94 for transmitting the rotary powers between the change-speed gearbox 33 and the rear wheels 93, thereby absorbing rotational differences between the front wheels 91 and the rear wheels 93.

The locker means 42 comprises a lock mode that locks the differential device 41 so as not to make the differential device 41 demonstrate the function of absorbing rotational differences between the front wheels 91 and the rear wheels 93, and a lock cancelation mode that does not lock the function of the differential device 41.

The rear-wheel interrupter means 5 is positioned between the first rear-wheel transmission unit 94 being connected to the differential device 41, and to the second rear-wheel transmission unit 95 to be connected to the rear wheels 93; and is a means that interrupts between the differential device 41 and the rear wheels 93. As far as the rear-wheel interrupter means 5 can switch between connection and disconnection, it is possible to use publicly-known technologies therefor. For example, it is possible to think of using friction clutches, or electromagnetic clutches, and the like, therefor.

The transfer 21 makes the front-wheel connection mode by putting the locker means 42 into the locked mode, and makes the rear-wheel disconnection mode by disconnecting the rear-wheel interrupter means 5. Therefore, at the time of braking a vehicle, the locker means 42 makes the locked mode, whereas the rear-wheel interrupter means comes to be disconnected. Note that, upon driving a vehicle with the four wheels, the rear-wheel interrupter means 5 connects the first rear-wheel transmission unit 94 with the second rear-wheel transmission unit 95 so as to be capable of rotating integrally with one another.

Next, explanations will be made on operations and advantageous effects of the power transmission apparatus 11 according to present Embodiment No. 1. First of all, other than the time of braking a vehicle such as decelerating or braking it, that is, when driving the vehicle by the front wheels 91 and rear wheels 92 such as starting it to move, accelerating it, running or cruising it at constant speed and circling or cornering it, the transfer 21 puts the locker means 42 into the lock cancelation mode, and puts the rear-wheel interrupter means 5 into the connection mode. When rotary powers are output by means of driving the internal combustion engine 31 as well as the motor generator 31, they are transmitted to the transfer 21 by way of the change-speed gearbox 33. The transfer 21 distributes the transmitted rotary powers between the front wheels 91 and the rear wheels 93, and then transmits the rotary powers to them. On this occasion, in cases where rotational differences occur between the front wheels 91 and the rear wheels 93 by means of circling or cornering, and so forth, the vehicle, they are absorbed by means of the differential device 41.

Next, at the time of braking the vehicle, the power transmission apparatus 11 disconnects the rear-wheel interrupter means 5, turns the locker means into the locked mode, and puts the transfer 21 into the front-wheel connection mode and rear-wheel disconnection mode. And, it sets up a regeneration mode in which the rotary powers from the front wheels 91 are regenerated by the motor generator 32. Therefore, loads (or kinetic energies) being applied to the front wheels 91 are transmitted as rotary powers from the front wheels 91 to the front-wheel transmission unit 92, the differential device 41, the change-speed gearbox 33 and the motor generator 32, and are then regenerated at the motor generator 32. Note that the front wheels 91 and the rear wheels 93 are equipped with a mechanical brake, respectively, and that braking is applied to the rear wheels 93 by the mechanical brakes alone, whereas the mechanical brakes are used to the front wheels 91, if needed (namely, with respect to loads that are less likely to be completely regenerated by the motor generator 32.

In accordance with the power transmission apparatus 11 according to present Embodiment No . 1, since it is possible to regenerate an amount of regenerative energy, which is transmitted from the front wheels 91 to the motor generator 32 by way of the transfer 21, regardless of the rear wheels 93, it is possible to regenerate the loads being applied to the front wheels 91 depending on needs. Note that, since the rear wheels 93 are disconnected from the internal combustion engine 31 as well as the motor generator 32, it is not possible to regenerate loads being applied to the rear wheels 93. However, the loads to the front wheels 91 are larger at the time of braking the vehicle. Consequently, an amount of regenerative energy, which comes only from the front wheels 91 to regenerate when disconnecting the rear wheels 93, is larger than an amount of regenerative energy, which comes from the front wheels 91 and rear wheels 93 to regenerate according to the fixed distribution ratios. Since an amount of regenerative energy augments, it is also possible to expect another advantageous effect that the fuel consumption or mileage of vehicle can be upgraded and so forth by utilizing the resulting energy at the time of accelerating and so on the vehicle.

Moreover, since the locker means 42, which locks the function of the differential device 41 in the transfer 21, has been usually mounted on vehicles, and since it is possible to deal with making the power transmission apparatus 11 according to present Embodiment No. 1 by adding the rear-wheel interrupter means 5 thereto, it is feasible to realize them at low cost. Furthermore, since it is feasible to make regenerative energies, which result from the front wheels 91 to regenerate, closer to braking forces being required for braking a vehicle, the mechanical brakes' shared responsibility therefor becomes less. As a result, this leads to reducing the wear amounts in the mechanical brakes, and hence to reducing the running costs thereof.

### (Modified Embodiment No. 1)

A power transmission apparatus 14 according to present Modified Embodiment No. 1 has the same constructions as those of the power transmission apparatus 11 according to Embodiment No . 1, but the positional relationship between the internal combustion engine 31, the motor generator 32 and the change-speed gearbox 33 differs from that of the vehicle having the power transmission apparatus 11 on-board.

As illustrated in Fig. 3, the transfer 21 is connected with the motor generator 3. The internal combustion engine 31 and the change-speed gearbox 33 are connected one another, and the change-speed gearbox 33 and the motor generator 3 are connected one another.

The power transmission apparatus 14 according to present Modified Embodiment No. 1 comprises the same operations and advantageous effects as those of the power transmission apparatus 11 according to Embodiment No. 1.

### (Modified Embodiment No. 2)

A power transmission apparatus 15 according to present Modified Embodiment No. 2 has the same constructions as those of the power transmission apparatus 11 according to Embodiment No . 1, but the positional relationship between the internal combustion engine 31, the motor generator 32 and the change-speed gearbox 33 differs from that of the vehicle having the power transmission apparatus 11 on-board.

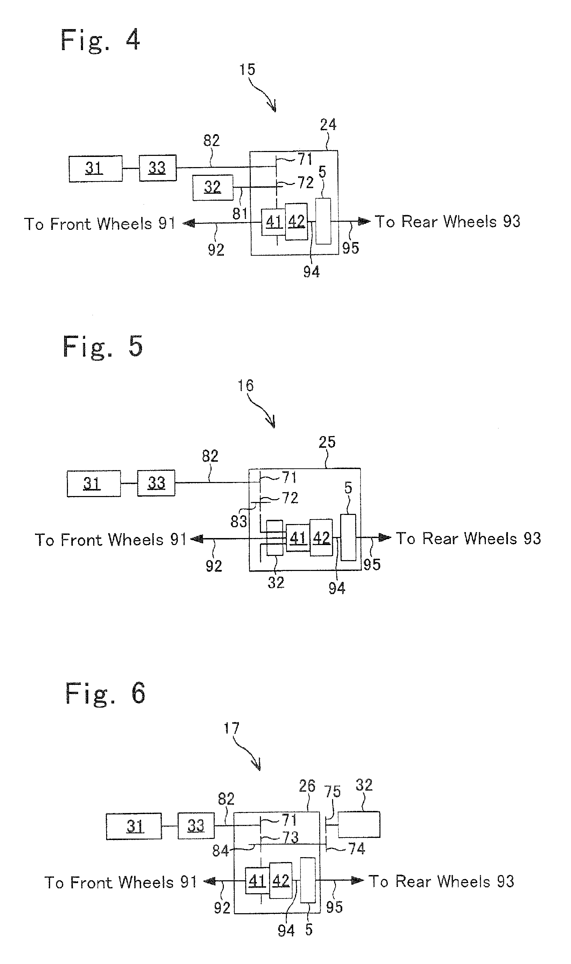

As illustrated in Fig. 4, the motor generator 32 is put in place so that a shaft 81 for input and output to and from the motor generator 32 is distinct from a shaft 82 between a transfer 24 and the internal combustion engine 31 as well as the change-speed gearbox 33 that are connected in series. The rotary powers are transmitted between the internal combustion engine 31 and the differential device 41 by way of a gear 71, which is put in place so as to be capable of rotating integrally with the shaft 82, and a gear 72, which is put in place so as to be capable of rotating integrally with the shaft 81 for input and output to and from the motor generator 32. The rotary powers are transmitted between the motor generator 32 and the differential device 41 by way of the gear 72.

The power transmission apparatus 15 according to present Modified Embodiment No. 2 comprises the same operations and advantageous effects as those of the power transmission apparatus 11 according to Embodiment No. 1.

### (Modified Embodiment No. 3)

A power transmission apparatus 16 according to present Modified Embodiment No. 3 comprises the same operations and advantageous effects as those of the power transmission apparatus 11 according to Embodiment No. 1 fundamentally. Hereinafter, explanations will be made while focusing on the distinctive parts.

As illustrated in Fig. 5, a transfer 25 comprises the differential device 41, the locker means 42, and the rear-wheel interrupter 5; and further comprises the motor generator 32 that is put in place therein. The motor generator 32 comprises the front-wheel transmission unit 92 that is put in place coaxially with the differential apparatus 41, the first rear-wheel transmission unit 94 and the second rear-wheel transmission unit 95 so as to make the rotary shaft; and is put in place in series with respect to the differential device 41. The rotary powers are transmitted between the motor generator 32 and the differential device 41 by way of a gear 73 that is put in place so as to be capable of rotating idly with respect to the front-wheel transmission unit 92. The rotary powers are transmitted between the internal combustion engine 31 and the transfer 25 by way of the change-speed gear box 33 and a shaft 82. A gear 71, which is capable of rotating integrally with the shaft 82, always meshes with a gear 74, which is capable of rotating integrally with an additional shaft 83 that is distinct from the shaft 82. The gear 74 of the additional shaft 83 always meshes with the gear 73 of the motor generator 32. Therefore, the rotary powers, which the internal combustion engine 31 has output, are transmitted to the change-speed gearbox 33, the shaft 82, the gear 71, the gear 74, the gear 73 and the differential device 41 in this order.

The power transmission apparatus 16 according to present Modified Embodiment No. 3 comprises the same operations and advantageous effects as those of the power transmission apparatus 11 according to Embodiment No. 1.

### (Modified Embodiment No. 4)

A power transmission apparatus 17 according to present Modified Embodiment No. 4 has the same constructions as those of the power transmission apparatus 11 according to Embodiment No. 1 fundamentally, but the position of the motor generator 32 differs from that of the vehicle having the power transmission apparatus 11 on-board.

As illustrated in Fig. 6, the motor generator 32 is not put in place in series to the internal combustion engine 31, and to the change-speed gearbox 33, and accordingly transmits the rotary powers between itself and the differential device 41 by way of a shaft 84 that is added to a transfer 26. The shaft 84 is disposed in an axial direction that is different from that of the shaft 71 that is designed for transmitting the rotary powers between the internal combustion engine 31 and the transfer 26; and comprises two gears 73 and 74 that are capable of rotating integrally with itself. One of the two gears, the gear 74, always meshes with a gear 75 for input and output to and from the motor generator 32. The other one the two gears, the gear 73, always meshes with the gear 71, which is capable of rotating integrally with the shaft 82 that is connected with the change-speed gear box, and with the differential device 41. The rotary powers are transmitted between the internal combustion engine 31 and the differential device 41 by way of the change-speed gearbox 33, the shaft 82, the gear 72 and the gear 73. The rotary powers are transmitted between the motor generator 32 and the differential device 42 by way of the gear 75, the gear 74, the shaft 84 and the gear 73.

The power transmission apparatus 17 according to present Modified Embodiment No. 4 comprises the same operations and advantageous effects as those of the power transmission apparatus 11 according to Embodiment No. 1.

### (Modified Embodiment No. 5)

A power transmission apparatus 18 according to present Modified Embodiment No. 5 has the same constructions as those of the power transmission apparatus 11 according to Embodiment No. 1 fundamentally, but the positional relationship between the internal combustion engine 31, the motor generator 32 and the change-speed gearbox 33 differs from that of the vehicle having the power transmission apparatus 11 on-board.

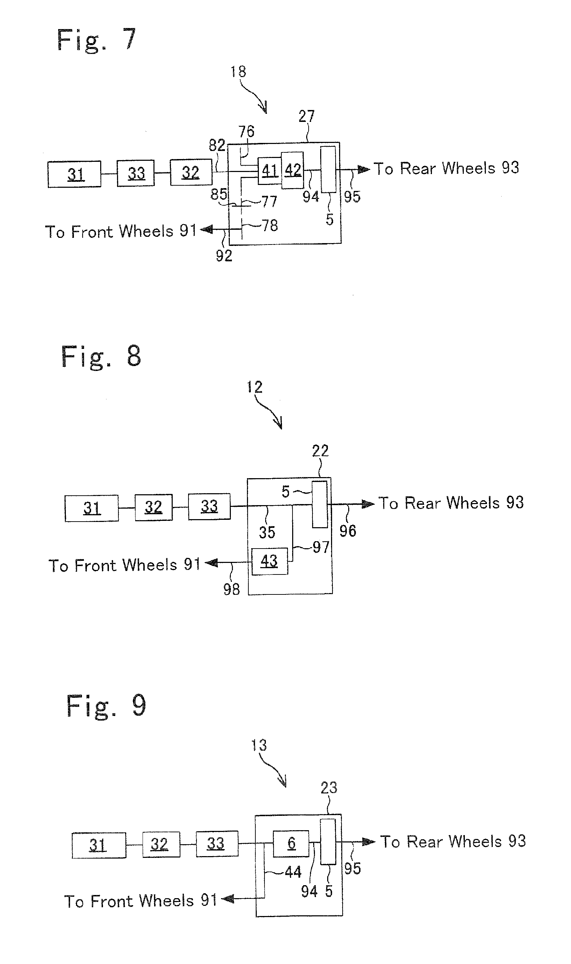

As illustrated in Fig. 7, a transfer 27 is connected with the motor generator 3. The internal combustion engine 31 and the change-speed gearbox 33 are connected one another, and the change-speed gearbox 33 and the motor generator 3 are connected one another.

The front-wheel driving shaft 92, which transmits the rotary powers between the front wheels 91 and the differential device 41, is disposed in an axial direction that is different from that of the differential device 41, locker means 42, rear-wheel interrupter means 5, first rear-wheel driving shaft 94 and second rear-wheel driving shaft 95. The differential device 41, the locker means 42, the rear-wheel interrupter means 5, the first rear-wheel driving shaft 94, and the second rear-wheel driving shaft 95 are put in place coaxially with an axial direction that connects the internal combustion engine 31, the change-speed gearbox 33, and the motor generator 32 in series one another. Furthermore, an additional shaft 85 is added, and is distinct from the front-wheel driving shaft 92, and from a shaft 82 that connects between the motor generator 32 and the differential device 41. And, the additional shaft 85 comprises a gear 77 that is capable of rotating integrally with the additional shaft 85. Moreover, the front-wheel driving shaft 91 comprises a gear 78 that is capable of rotating integrally with the front-wheel driving shaft 91. The gear 77 of the additional shaft 85 always meshes with the gear 78. Between the front wheels 91 and the differential device 41, the rotary powers are transmitted from a gear 76, whose axis of rotation is made of the shaft 82 that connects the motor generator 32 with the differential device 41, by way of the gear 77 on the additional shaft 85 that always meshes with the gear 76, the gear 78 on the front-wheel driving shaft 91, and the front-wheel driving shaft 92 in this order.

The power transmission apparatus 18 according to present Modified Embodiment No. 5 comprises the same operations and advantageous effects as those of the power transmission apparatus 11 according to Embodiment No. 1.

### (Embodiment No. 2)

A power transmission apparatus 12 according to present Embodiment No. 2 comprises the same constructions as well as the same operations and advantageous effects as those of the power transmission apparatus 11 according to Embodiment No. 1 fundamentally. Hereinafter, explanations will be made while focusing on the distinctive parts.

The power transmission apparatus 12 comprises a transfer 22, and further comprises, as the other means, the same means as those of the power transmission apparatus 11 according to Embodiment No. 1.

As illustrated in Fig. 8, the transfer 22 comprises a front-wheel coupler means 43, and the rear-wheel interrupter means 5. The rear-wheel interrupter means 5 is connected with the change-speed gearbox 33 by means of an input unit 35, and is connected with the rear wheels 93 by means of a rear-wheel transmission unit 96. The front-wheel coupler means 43 is connected with the input unit 35 by means of a first front-wheel transmission unit 97, and is connected with the front wheels 91 by means of a second front-wheel transmission unit 98. That is, the front-wheel coupler means 43 lies between the change-speed gearbox 33 and the front wheels 91; in a case where the rotary powers are transmitted by way of the change-speed gearbox 33, it is positioned on one of routes after they are distributed between the front wheels 91 and the rear wheels 93. The front-wheel coupler means 43 is capable of making the transmission proportions of the rotary powers variable, couples between the front wheels 91 and the internal combustion engine 31 as well as the motor generator 32 interruptibly, and can absorb rotational differences between the front wheels 91 and the rear wheels 93 (it is possible to use a multiple-plate clutch therefor, for instance). The rear-wheel interrupter means 5 lies between the change-speed gearbox 33 and the rear wheels 93; in a case where the rotary powers are transmitted by way of the change-speed gearbox 33, it is positioned on the other of the routes after they are distributed between the front wheels 91 and the rear wheels 93, and couples between the rear wheels 93 and the internal combustion engine 31 as well as the motor generator 32 interruptibly.

A front-wheel connection mode of the transfer 22 is a mode in which the front-wheel coupler means 43 connects the front wheels 91 with the internal combustion engine 31 as well as the motor generator 32, whereas a rear-wheel connection mode is a mode in which the rear-wheel interrupter means 5 disconnects between the rear wheels 93 and the internal combustion engine 31 as well as the motor generator 32.

In the power transmission apparatus 12 according to present Embodiment No. 2, the transfer 22 is put into the front-wheel connection mode at the time of driving a vehicle, and thereby the rear-wheel interrupter means 5 connects the rear wheels 93 with the internal combustion engine 31 as well as the motor generator 32. When rotary powers are output by means of driving the internal combustion engine 31 as well as the motor generator 32, they are transmitted to the transfer 22 by way of the change-speed gearbox 33. The transfer 22 distributes the transmitted rotary powers between the front wheels 91 and the rear wheels 93, and then transmits the rotary powers to them. On that occasion, in a case where circling or turning and so forth the vehicle results in the rotational differences that occur between the front wheels 91 and the rear wheels 93, they are absorbed by means of the front-wheel coupler means 43.

And, at the time of braking the vehicle, the power transmission apparatus 12 comes to disconnect the rear-wheel interrupter means 5, and puts the transfer 22 into the front-wheel connection mode and rear-wheel disconnection mode. And, it sets up a regeneration mode in which the rotary powers from the front wheels 91 are regenerated by the motor generator 32. Therefore, loads being applied to the front wheels 91 are transmitted as rotary powers from the front wheels 91 to the second front-wheel transmission unit 98, the front-wheel coupler means 43, the front-wheel transmission unit 97, the input unit 35, the change-speed gearbox 33 and finally to the motor generator 32; and are then regenerated at the motor generator 32.

In accordance with the power transmission apparatus 12 according to present Embodiment No . 2, since it is possible to regenerate an amount of regenerative energy, which is transmitted from the front wheels 91 to the motor generator 32 by way of the transfer 21, regardless of the rear wheels 93, it is possible to regenerate the loads being applied to the front wheels 91 depending on needs. Note that, since the rear wheels 93 are disconnected from the internal combustion engine 31 as well as the motor generator 32, it is not possible to regenerate loads being applied to the rear wheels 93. However, the loads to the front wheels 91 are larger at the time of braking the vehicle. Consequently, an amount of regenerative energy, which comes only from the front wheels 91 for regeneration when disconnecting the rear wheels 93, is larger than an amount of regenerative energy, which comes from the front wheels 91 and rear wheels 93 for regeneration according to the fixed distribution ratios. Since an amount of regenerative energy augments, it is also possible to expect another advantageous effect that the fuel consumption or mileage of vehicle can be upgraded and so forth by utilizing the resulting energy at the time of accelerating and so on the vehicle.

Moreover, since it is possible to realize the transfer 22 by using a variable distribution-type multiple-plate clutch or a viscous coupling style, which has been used as the front-wheel coupler means 43 in full time-type four-wheel-drive vehicle, as it is, and by adding the rear-wheel interrupter means 5, it is possible to keep down the cost. Furthermore, since it is feasible to make regenerative energies, which result from the front wheels 91 to regenerate, closer to braking forces being required for braking a vehicle, the mechanical brakes' shared responsibility therefor becomes less. As a result, this leads to reducing the wear amounts in the mechanical brakes, and hence to reducing the running costs thereof.

### (Embodiment No. 3)

A power transmission apparatus 13 according to present Embodiment No. 3 comprises the same constructions as well as the same operations and advantageous effects as those of the power transmission apparatus 11 according to Embodiment No. 1 fundamentally. Hereinafter, explanations will be made while focusing on the distinctive parts.

The power transmission apparatus 13 comprises a transfer 23, and further comprises, as the other means, the same means as those of the power transmission apparatus 11 according to Embodiment No. 1.

As illustrated in Fig. 9, the transfer 23 comprises a front-wheel coupler means 44, an interrupter means 6, and the rear-wheel interrupter means 5. The front-wheel coupler means 44 is a means that couples the front wheels 98 with the change-speed gearbox 33 directly. The interrupter means 6 is connected with the change-speed gearbox 3 by way of the front-wheel coupler means 44, and is connected with the rear-wheel interrupter means 5 by means of the first rear-wheel transmission unit 94. The interrupter means 6 is capable of making the transmission proportions of the rotary powers variable, couples between the rear wheels 93 and the internal combustion engine 31 as well as the motor generator 32 interruptibly, and can absorb rotational differences between the front wheels 91 and the rear wheels 93 (it is possible to use a multiple-plate clutch therefor, for instance). Therear-wheelinterrupter means 5 is connected with the interrupter means 6 by means of the first rear-wheel transmission unit 94, and is connected with the rear wheels 93 by means of the second rear-wheel transmission unit 95.

The transfer 23 is always in the front-wheel connection mode, because it is always connected between the front wheels 91 and the change-speed gearbox 33. And, its rear-wheel disconnection mode is a mode in which the rear-wheel interrupter means 5 is disconnected and the interrupter means 6 is disconnected.

In the power transmission apparatus 13 according to present Embodiment No. 3, the transfer 23 is always in the connection mode regardless of the time at which a vehicle is driven and the other time at which it is braked. And, at the time of driving the vehicle, the transfer 23 puts the interrupter means 6 into the connection mode that makes it possible to realize the proportions that fit to running or traveling conditions, and thereby the rear-wheel interrupter means 5 comes to connect the rear wheels 93 with the internal combustion engine 31 as well as the motor generator 32 by way of the interrupter means 6. When rotary powers are output by means of driving the internal combustion engine 31 as well as the motor generator 32, they are transmitted to the transfer 23 by way of the change-speed gearbox 33. The transfer 23 distributes the transmitted rotary powers between the front wheels 91 and the rear wheels 93, and then transmits the rotary powers to them. On that occasion, in a case where circling or turning and so forth the vehicle results in the rotational differences that occur between the front wheels 91 and the rear wheels 93, they are absorbed by means of the interrupter means 6.

And, at the time of braking the vehicle, the power transmission apparatus 13 comes to disconnect the rear-wheel interrupter means 5 as well as the interrupter means, and puts the transfer 23 into the front-wheel connection mode and rear-wheel disconnection mode. And, it sets up a regeneration mode in which the rotary powers from the front wheels 91 are regenerated by the motor generator 32. Therefore, loads being applied to the front wheels 91 are transmitted as rotary powers from the front wheels 91 to the front-wheel coupler means 44, the change-speed gearbox 33 and finally to the motor generator 32; and are then regenerated at the motor generator 32.

In accordance with the power transmission apparatus 13 according to present Embodiment No . 3, since it is possible to regenerate an amount of regenerative energy, which is transmitted from the front wheels 91 to the motor generator 32 by way of the transfer 21, regardless of the rear wheels 93, it is possible to regenerate the loads being applied to the front wheels 91 depending on needs. Note that, since the rear wheels 93 are disconnected from the internal combustion engine 31 as well as the motor generator 32, it is not possible to regenerate loads being applied to the rear wheels 93. However, the loads to the front wheels 91 are larger at the time of braking the vehicle. Consequently, an amount of regenerative energy, which comes only from the front wheels 91 for regeneration when disconnecting the rear wheels 93, are larger than an amount of regenerative energy, which comes from the front wheels 91 and rear wheels 93 for regeneration according to the fixed distribution ratios. Since an amount of regenerative energy augments, it is also possible to expect another advantageous effect that the fuel consumption or mileage of vehicle can be upgraded and so forth by utilizing the resulting energy at the time of accelerating and so on the vehicle.

Moreover, since it is possible to realize the transfer 23 by using a variable distribution-type multiple-plate clutch or a viscous coupling style, which has been used as the interrupter means 6 in full time-type four-wheel-drive vehicle, as it is, and by adding the rear-wheel interrupter means 5, it is possible to keep down the cost. Furthermore, since it is feasible to make regenerative energies, which result from the front wheels 91 to regenerate, closer to braking forces being required for braking a vehicle, the mechanical brakes' shared responsibility therefor becomes less. As a result, this leads to reducing the wear amounts in the mechanical brakes, and hence to reducing the running costs thereof.

And, it is possible to make power transmission apparatuses into one which comprises the same operations and advantageous effects as those of the power transmission apparatus 13 according to Embodiment No. 3, not by adding the rear-wheel interrupter means 5, but by simply putting the interrupter means 6 into disconnection. That is, since no parts are added at all, it is possible to realize it at much lower cost.

### (Others)

So far, although explanations have been made on some of suitable embodiment modes and modified modes according to the present invention, the present invention is not one which is limited to the aforementioned embodiment modes and modified modes. For example, in Modified Embodiment No. 1 through Modified Embodiment No. 5, it is possible to substitute the front-wheel coupler means 43 according to Embodiment No. 2 or the interrupter means 6 according to Embodiment No. 3 for the differential device 41 and locker means 42 in their transfers. Even in a case where the front-wheel coupler means 4 and interrupter means 6 have substituted for them, the resulting power transmission apparatuses comprise the same operations and advantageous effects as those of the power transmission apparatus 12 or power transmission apparatus 13.

## Claims

1. A power transmission apparatus for four-wheel-drive hybrid vehicle, the power transmission apparatus being **characterized in that**:
it comprises a front-wheel/rear-wheel driving-force distributor means for distributing rotary powers, which are output from an internal combustion engine as well as a rotary electric appliance, between front wheels and rear wheels, and then transmitting the rotary powers to them;
wherein said front-wheel/rear-wheel driving-force distributor means sets up the following when braking a vehicle:
a rear-wheel disconnection mode for disconnecting between said front-wheel/rear-wheel driving-force distributor means and said rear wheels;
a front-wheel connection mode for connecting between said front-wheel/rear-wheel driving-force distributor means and said front wheels; and
a regeneration mode for regenerating said rotary powers from said front wheels by said rotary electric appliance.

2. The power transmission apparatus for four-wheel-drive hybrid vehicle as set forth in claim 1, wherein:
said front-wheel/rear-wheel driving-force distributor means comprises:
a differential device for absorbing rotational differences between said front wheels and said rear wheels;
a locker means for putting said differential device into a locked mode; and
a rear-wheel interrupter means for interrupting between said differential device and said rear wheels;
wherein said front-wheel connection mode is to put said locker means into said locked mode; and
said rear-wheel disconnection mode is to put said rear-wheel interrupter means into disconnection.

3. The power transmission apparatus for four-wheel-drive hybrid vehicle as set forth in claim 1, wherein:
said front-wheel/rear-wheel driving-force distributor means comprises:
a rear-wheel interrupter means for interruptibly coupling between said rear wheels and said internal combustion engine as well as said rotary electric appliance; and
a front-wheel coupler means for always connecting or interruptibly coupling between said front wheels and said internal combustion engine as well as said rotary electric appliance;
wherein said front-wheel connection mode is to put said front-wheel coupler means into connection; and
said rear-wheel disconnection mode is to put said rear-wheel interrupter means into disconnection.
